Europäisches Patentamt

European Patent Office

Office européen des brevets

(11) Veröffentlichungsnummer: **0 390 958**
**A1**

## (12) EUROPÄISCHE PATENTANMELDUNG

(21) Anmeldenummer: 89106218.4

(22) Anmeldetag: 07.04.89

(51) Int. Cl.⁵: **H04L 7/033, H04N 7/00**

(43) Veröffentlichungstag der Anmeldung:
10.10.90 Patentblatt 90/41

(84) Benannte Vertragsstaaten:
**AT BE DE FR GB IT NL**

(71) Anmelder: **Siemens Aktiengesellschaft**
**Wittelsbacherplatz 2**
**D-8000 München 2(DE)**

(72) Erfinder: **Preller, Peter, Dipl.-Ing.**
**Heinrich-Schütz-Weg 5**
**D-8000 München 60(DE)**

(54) **Verfahren zur Datentaktregenerierung für Datensignale und Schaltungsanordnung zur Durchführung des Verfahrens.**

(57) Die Erfindung betrifft ein Verfahren zur Datentaktregenerierung für Datensignale, bei denen der Takt nicht mitübertragen wird sowie eine Schaltungsanordnung zur Durchführung des Verfahrens. Als Voraussetzung für das Verfahren muß die Datentaktfrequenz bekannt sein.

Gemäß dem Verfahren wird aus einer Vielzahl von bereitgestellten Taktsignalen, die die bekannte Datentaktfrequenz aufweisen und jedoch alle zueinander phasenverschoben sind, ein Taktsignal als regenerierter Datentakt gebildet, das eine geringste Phasenabweichung zu den Datenflankenimpulsen des Datensignals aufweist.

EP 0 390 958 A1

## Verfahren zur Datentaktregenerierung für Datensignale und Schaltungsanordnung zur Durchführung des Verfahrens

Die Erfindung betrifft ein Verfahren zur Datentaktregenerierung für Datentsignale nach dem Oberbegriff des Anspruches 1 sowie eine Schaltungsanordnung zur Durchführung des Verfahrens.

Grundsätzlich muß in Datentübertragungssystemen, bei denen das Taktsignal nicht mitübertragen wird oder keine zusätzlichen Bits für die richtige Zuordnung von Takt- und Empfangssignal verwendet werden (sogenannte Start/Stop-Systeme) aus dem empfangenen Datentsignal der Takt regeneriert werden. Ein Beispiel hierfür ist das Videotextsystem, auch Teletextsystem genannt, durch das zusätzliche Informationen am Fernsehschirm abrufbar sind.

Aus der Siemens-Produktinformation "ICs für die Unterhaltungselektronik, Videotext System, Ausgabe 8.87", Seite 9 bis 23, ist ein Verfahren zur Taktregenerierung im Zusammenhang mit der integrierten Videotext-Prozessor-Chip SDA 5231 bekannt. Das Verfahren sieht vor, aus den Impulsflanken der Datensignale Datenflankenimpulse abzuleiten, die zum Anstoßen eines Phasenschiebers benutzt werden, der zusammen mit einem freilaufenden Oszillator der Taktrückgewinnung dient. Die Datenflankenimpulse erzeugen einen der Phasenabweichung zwischen dem freilaufenden Oszillator und der Datentbits proportionale Regelspannung, die die Phase des Oszillators einstellt. Funktioneller Bestandteil des Phasenschiebers ist ein extern an das Videotext-Prozessor-Chip anzuschließender LC-Schwingkreis.

Die externe Beschaltung des integrierten Bausteins mit einem solchen LC-Schwingkreis ist insofern problematisch, als die Eigenfrequenz des Schwingkreises auf die Datenfrequenz des Datensignals abgeglichen werden muß. Der damit verbundene technische Aufwand und der zusätzliche Platzbedarf läuft der zunehmenden Integration sowie der einfachen Handhabung für den Anwender dieser integrierten Bausteine zuwider. Zusätzlich kann sich die Eigenfrequenz des LC-Schwingkreises infolge Alterungserscheinungen ändern, womit die Datentaktrückgewinnung zumindest nicht mehr zuverlässig zu bewerkstelligen ist.

Soll die Datentaktregenerierung für unterschiedliche Datensignale mit jeweils anderen Datenfrequenzen vorgesehen werden, muß zur Datentaktrückgewinnung je ein LC-Schwingkreis mit dessen Eigenfrequenz vorgesehen werden.

Aufgabe der vorliegenden Erfindung ist es, ein völlig anderes Verfahren zur Datentaktrückgewinnung anzugeben, das keiner Phasenschiebung bedarf und daher mit einer Schaltungsanordnung ohne LC-Schwingkreis durchführbar ist.

Diese Aufgabe wird durch die kennzeichnenden Merkmale des Anspruchs 1 gelöst.

Eine Schaltungsanordnung zur Durchführung des erfindungsgemäßen Verfahrens ist Gegenstand des Anspruchs 7.

Weiterbildungen der Erfindung sind in den Unteransprüchen beschrieben.

Das erfindungsgemäße Verfahren beruht darauf, eine Vielzahl von zueinander phasenverschobener Taktsignale mit der bekannten Taktfrequenz zu erzeugen und daraus ein Taktsignal als regenerierten Datentakt zu bilden, das eine geringste Phasenabweichung zu den Datenflankenimpulsen aufweist. Tritt zwischen den phasenverschobenen Taktsignalen und den Datenflankenimpulsen eine Phasenverschiebung auf, so kann entweder das arithmetische Mittel der auftretenden Phasenabweichungen bestimmt und daraus das Taktsignal als regenerierter Datentakt abgeleitet werden oder dasjenige Taktsignal wird als regenerierter Datenttakt ausgewählt, das die geringste Phasenabweichung zu den Daten flankenimpulsen aufweist. Die Phasenabweichung zwischen dem ausgewählten Taktsignal und den Datenflankenimulsen ist im letztgenannten Fall umso geringer, je mehr zueinander phasenverschobener Taktsignale, vorteilhafterweise mit äquidistanten Phasenabständen, vorgesehen werden. Der maximale Phasenfahler beträgt dann die halbe Breite eines solchen Phasenabstandes.

Mit dem erfindungsgemäßen Verfahren kann so z. B. der Takt von NRZ-codierten Datensignalen, wie z. B. Videotext oder VPS usw., zurückgewonnen werden. Das nur an den Flanken des Datensignales erkennbare Taktraster dient zur Rückgewinnung der richtigen Taktphase. Voraussetzung beim erfindungsgemäßen Verfahren ist die Kenntnis der Datenübertragungsfrequenz.

Die Schaltungsanordnung zur Durchführung des Verfahrens weist eine Oszillatoreinrichtung, vorteilhafterweise einen spannungsgesteuerten Ringoszillator, zum Erzeugen der Vielzahl von zueinander phasenverschobener und jeweils die Datentaktfrequenz aufweisender Datentaktsignale auf. Über eine Datentaktermittlungseinrichtung werden in Abhängigkeit von der Phasenabweichung zwischen den Datenflankenimpulsen der Datensignale und der an den Ausgängen der Oszillatoreinrichtung anstehenden phasenverschobener Taktsignale ein Taktsignal als regeneriertes Datentaktsignal abgegriffen.

Die Erfindung wird im folgenden anhand von insgesamt 8 Figuren näher erläutert. Es zeigen:

FIG 1 eine bekannte PLL-Schaltung,

FIG 2 ein Blockschaltbild einer erfindungsgemäßen Schaltungsanordnung zur Durchführung der Datentaktrückgewinnung,

FIG 3 ein Blockschaltbild einer erfindungsgemäßen Schaltungsanordnung zur Datentaktrückgewinnung mit arithmetischer Mittelung der Phasenabweichung,

FIG 4 ein Ausführungsbeispiel einer integrierbaren Schaltungsanordnung zu FIG 3,

FIG 5 einen zeitlichen Verlauf von 11 zueinander phasenverschobener Taktsignale mit zwei Datentaktsignalen und daraus abgeleiteten Datenflankenimpulsen,

FIG 6 das Prinzip der arithmetischen Mittelung bei der Taktrückgewinnung zum ersten Datensignal,

FIG 7 das Prinzip der arithmetischen Mittelung für das zweite Datentaktsignal und

FIG 8 ein Blockschaltbild einer erfindungsgemäßen Schaltungsanordnung zur Datentaktrückgewinnung mittels Phasenvergleichereinrichtung und Phasendetektoreinrichtung.

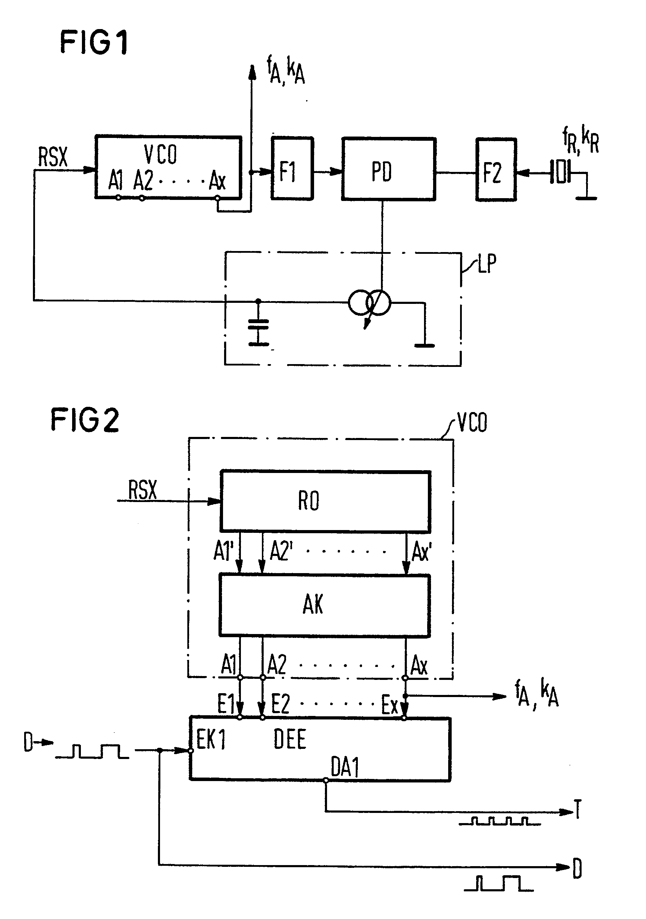

In FIG 1 ist eine PLL(Phase-locked-loop)-Schaltungsanordnung dargestellt, wie diese zum Erzeugen zueinander phasenverschobener Taktsignale beispielsweise verwendbar ist. Eine Ausgangsfrequenz $f_A$ einer über eine Steuergröße RSX steuerbaren Oszillatoreinrichtung VCO wird - gegebenenfalls über einen ersten Frequenzteiler F1 - einem Phasendetektor PD zugeführt und dort mit einer z. B. über einen zweiten Frequenzteiler F2 heruntergeteilten Referenzfrequenz $f_R$ verglichen. Abhängig von der ermittelten Phasenabweichung wird eine Ladungspumpe LP angesteuert, die als Ausgangsgröße die Stellgröße RSX für die Oszillatoreinrichtung VCO zur Verfügung stellt und deren Ausgangsfrequenz $f_A$ so einstellt, daß diese mit der Referenzfrequenz $f_R$, die z. B. aus einem Synchronsignal des Fernsehsignales oder aus einem QuarzOszillator ableitbar ist, übereinstimmt, und zwar so genau, daß die Phasenverschiebung zwischen der Phase $k_A$ und $k_R$ nicht wegläuft. Gemäß der Erfindung wird die Referenzfrequenz $f_R$ oder die heruntergeteilte Referenzfrequenz wie die als vorausgesetzt bekannte Datentaktfrequenz $f_D$ gewählt. Die im folgenden noch näher zu beschreibende Oszillatoreinrichtung VCO weist eine Vielzahl von Ausgangsklemmen A1...Ax auf, an denen jeweils zu einander phasenverschobene Taktsignale T1...Tx abgreifbar sind, die jedoch alle die bekannte Datentaktfrequenz aufweisen.

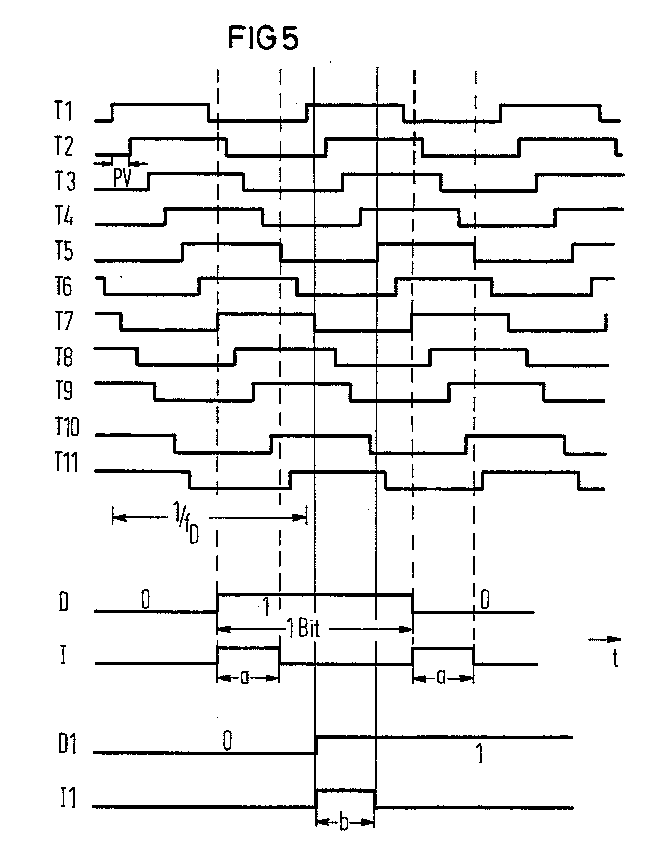

In FIG 2 ist ein Blockschaltbild einer Schaltungsanordnung zur Durchführung der Datentaktrückgewinnung nach dem erfindungsgemäßen Verfahren dargestellt. Die steuerbare Oszillatoreinrichtung VCO wird beispielsweise durch einen im einzelnen noch in FIG 5 vorzustellenden Ringoszillator RO mit nachgeschalteter Auskoppeleinrichtung AK gebildet. An Ausgangsklemmen A1...Ax der derart aufgebauten Oszillatoreinrichtung VCO ist eine Datentaktermittlungseinrichtung DEE angeschlossen. Eine erste Eingangsklemme EK1 dieser Datentaktermittlungseinrichtung DEE ist zum Anlegen der Datensignale D, die ohne Datentakt empfangen werden, vorgesehen. Weitere Eingangsklemmen E1...Ex sind mit den Ausgangsklemmen A1...Ax der Oszillatoreinrichtung VCO verbunden. An einer Datentaktausgangsklemme DA1 ist in Abhängigkeit von der Phasenabweichung zwischen den in der Datentaktermittlungseinrichtung DEE aus den Datensignalen D gewonnenen Datenflankenimpulsen und der an den weiteren Eingangsklemmen E1...Ex anliegenden Taktsignale T1...Tx ein Taktsignal T als regeneriertes Datentaktsignal abgreifbar. Mit diesem Taktsignal T ist ein taktrichtiges Auslesen der Datensignale D möglich.

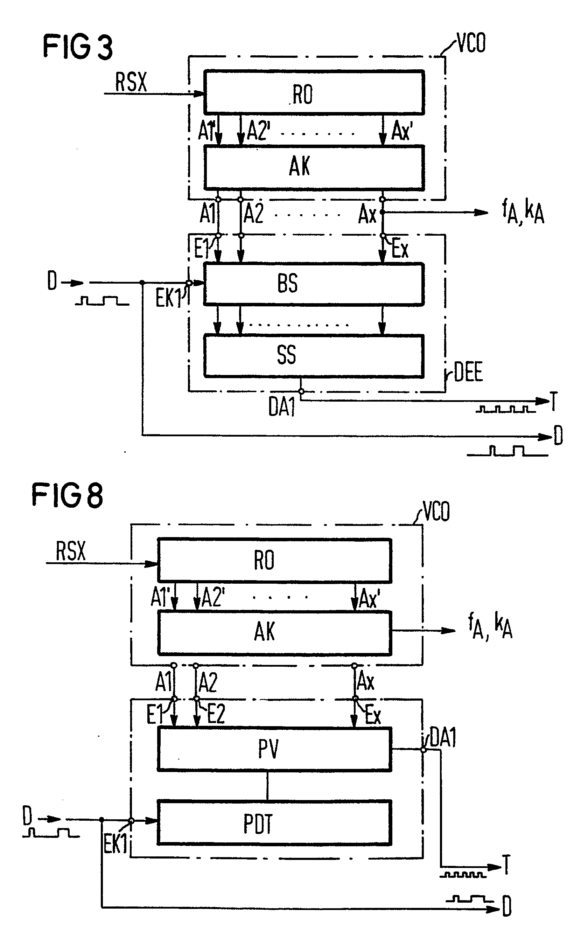

Das in FIG 3 dargestellte Blockschaltbild unterscheidet sich von FIG 2 lediglich durch eine detailliertere Darstellung der Datentaktermittlungseinrichtung DEE. Alle bisher bekannten Bezugszeichen, die in FIG 3 verwendet werden, stehen deshalb für die gleichen Schaltungskomponenten. Die Datentaktermittlungseinrichtung DEE weist eine mit den weiteren Eingangsklemmen E1...Ex verbundene Bewertungsschaltung BS sowie eine nachgeschaltete Summierungseinrichtung SS auf, deren Ausgang mit der Datentaktausgangsklemme DA1 in Verbindung steht. Mit dieser Schaltungsanordnung wird ein Taktsignal T als regenerierter Datentakt an die Datentaktausgangsklemme DA1 angelegt, das durch das arithmetische Mittel der auftretenden Phasenabweichungen zwischen den Datenflankenimpulsen I und aller Taktsignale T1...Tx bestimmt ist.

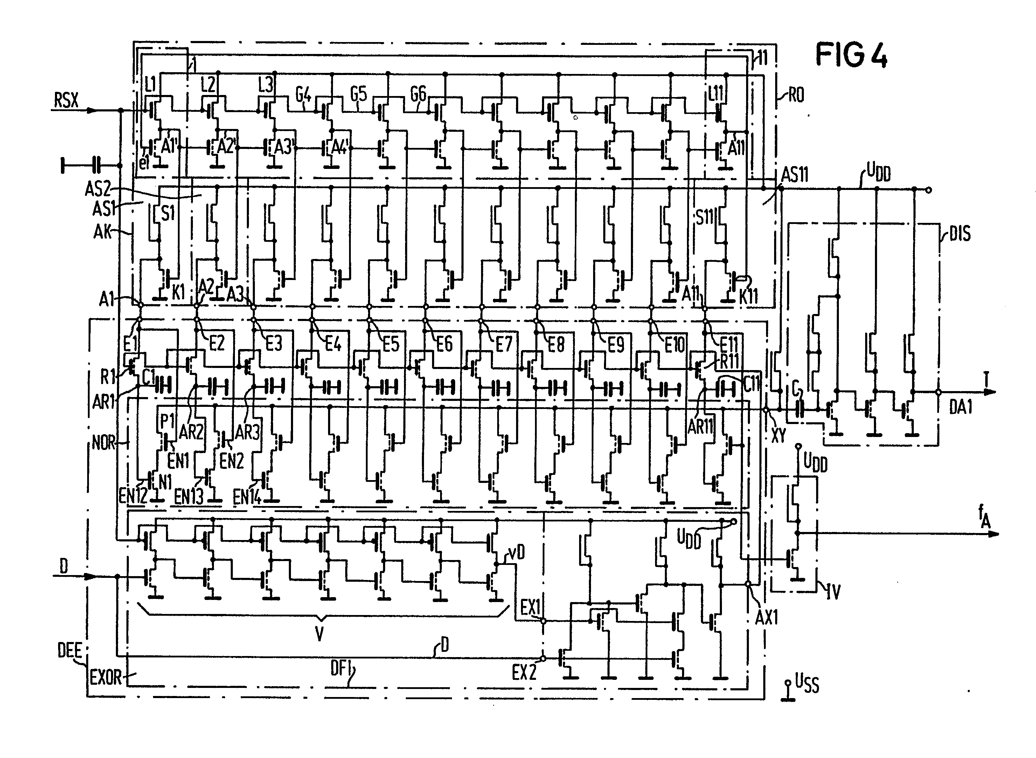

Eine im einzelnen dargestellte und integrierbare Schaltungsanordnung zur Durchführung des erfindungsgemäßen Verfahrens für die Datentaktregenerierung zeigt FIG 4. Die z. B. in MOS-Technologie realisierte Schaltungsanordnung weist eine spannungsgesteuerte Oszillatorschaltung in Form eines Ringoszillators RO mit einer ungeraden Anzahl, hier z. B. 11, von hintereinandergeschalteten und jeweils zwischen Versorgungsspannungsklemmen $U_{DD}$, $U_{SS}$ liegender Inverterstufen 1, 2...11 mit Lasttransistoren L1...L11 auf. In diesem Ausführungsbeispiel bestehen die Inverterstufen 1...11 jeweils aus einem Enhancement-MOS-FET sowie einem Lasttransistor in Form eines Depletion-MOS-FET. Die Ausgangsklemmen A1' bis A10' der Inverterstufen 1 bis 10 sind jeweils mit dem Gateanschluß des unmittelbar nachgeschalteten Enhancement-MOS-FET verbunden, während die Ausgangsklemme A11' der letzten Inverterstufe 11 mit der Eingangsklemme e1 der ersten Inverterstufe 1 und damit dem Gateanschluß des ersten Enhancement-MOS-FET verbunden ist. Jeder Gateanschluß G1...G11 der Lasttransistoren L1...L11 ist mit einer Eingangsklemme für eine die Oszillatorfrequenz $f_D$ bestimmende Steuergröße RSX verbunden. An den Ausgangsklemmen A1'...A11' der Inverterstufen 1...11 sind jeweils Taktsignale abgreifbar, die zueinander phasenverschoben sind, jedoch entsprechend der Steuergröße RSX die Oszillatorfrequenz $f_D$ aufweisen.

An die Ausgangsklemmen A1'...A11' der Inverterstufen 1...11 ist jeweils eine Auskoppelstufe AK in Form eines Inverters AS1 bis As11 nachgeschaltet, die zur Vermeidung von Rückwirkungen der nachfolgenden Schaltungsanordnung auf den Ringoszillator RO vorteilhafterweise vorgesehen wird. Dazu ist z. B. die Ausgangsklemme A1' mit dem Gateanschluß eines Enhancement-MOS-FET K1 verbunden, der über einen als Widerstand geschalteten Depletion-MOS-FET S1 zwischen den Versorgungsspannungsklemmen $U_{DD}$ und $U_{SS}$ liegt. Die übrigen Ausgangsklemmen A2'...A11' des Ringoszillators RO sind - wie in FIG 4 dargestellt - in gleicher Weise mit jeweils einem Inverter AS1 bis AS11 verbunden. Die zueinander phasenverschobenen Taktsignale sind an den Verbindungspunkten der beiden Transistoren eines jeden Inverters AS1 bis AS11 und damit den in FIG 4 dargestellten Klemmen A1 bis A11 rückwirkungsfrei abgreifbar.

Die an diesen Ausgangsklemmen A1...A11 anstehenden Taktsignale T1...T11 sind in FIG 5 oben beispielhaft für eine gegebene Oszillatorfrequenz $f_D$ des Ringoszillators RO dargestellt. Es ist hier anzumerken, daß zur Durchführung des erfindungsgemäßen Verfahrens die Datentaktrückgewinnung um so genauer erfolgen kann, je mehr Stufen der Ringoszillator RO aufweist. Die maximale Phasenabweichung des zu regenerierenden Datentaktsignales zu den tatsächlich durch den Ringoszillator RO gebildeten phasenverschobener Taktsignale T1...T11 wird so geringer.

Über eine an die Ausgangsklemme A11 (vgl. (FIG 4) des letzten Inverters AS11 angeschlossenen Invertereinrichtung Iv ist die bereits im Zusammenhang mit den FIG 1 bis 3 vorgestellte Ausgangsfrequenz $f_A$ und damit $f_D$ der Oszillatoreinrichtung abgreifbar.

An jede dieser Ausgangsklemmen A1...A11 ist ein schaltbares RC-Glied in Form eines als Widerstand geschalteten Enhancement-MOS-FET R1...R11 und ein Kondensator C1...C11 geschaltet. Der Verbindungspunkt AR1 des Widerstandes R1 und Kondensators C1 ist mit dem Steueranschluß eines weiteren Enhancement-MOS-FET N1 verbunden, während die Ausgangsklemme A1 mit dem Steueranschluß eines weiteren und zum vorgenannten Enhancement-MOS-FET N1 in Serie geschalteten Enhancement-MOS-FET P1 geschaltet ist. Der nicht mit dem vorgenannten Enhancement-MOS-FET N1 verbundene Anschluß dieses weiteren Enhancement-MOS-FET P1 ist mit einer Klemme XY verbunden, während der nicht mit dem Enhancement-MOS-FET P1 verbundene Anschluß des zuerst genannten Enhancement-MOS-FET N1 auf Bezugspotential liegt. Jede der weiteren Ausgangsklemmen A2...A11 ist in der vorgenannten Weise verschaltet.

Die schaltbaren Widerstände R1...R11 der RC-Glieder werden in Abhängigkeit von aus den Datensignal gewonnenen Datentflanken impulsen geschaltet. Dazu weist die Schaltungsanordnung beispielsweise eine Datenflankenermittlungseinrichtung DFI mit einer aus 7 Inverterstufen aufgebauten Verzögerungseinrichtung V auf, deren Ausgangsklemme mit einer ersten Eingangsklemme EX1 eines in MOS-Technologie hergestellten EXOR-Gatters verbunden ist und an dessen zweiter Eingangsklemme EX2 das unverzögerte Datensignal D anlegbar ist. Die Ausgangsklemme AX1 dieses EXOR-Gatters EXOR ist mit sämtlichen Steueranschlüssen der als Widerstände geschalteten Enhancement-MOS-FET R1 bis R11 verbunden.

Das an der Ausgangsklemme XY abgreifbare und bereits phasenrichtige Wechselsignal wird kapazitiv einer Digitalisierstufe DIS zugeführt, die den gewonnenen Takt verstärkt und digitalisiert.

An der Ausgangsklemme DA1 dieser Digitalisierstufe DIS ist das als regenerierter Datentakt gewonnene Taktsignal T abgreifbar. Mit diesem Taktsignal T können die Datensignale D taktrichtig weiterverarbeitet werden.

Die Wirkungsweise dieser in FIG 4 dargestellten beispielshaften Schaltungsanordnung wird anhand der FIG 5 bis 7 näher erläutert.

In FIG 5 sind die an den Ausgangsklemmen A1 bis A11 abgreifbaren Taktsignale T1 bis T11 gezeigt. Die Taktsignale T1 bis T11 sind alle zueinander jeweils um eine Phasenverschiebung PV in ihrer Phase zueinander verschieden. Sämtliche Taktsignale T1 bis T11 weisen jedoch die bekannte Datentaktfrequenz $f_D$ auf. Das empfangene Datensignal D hat beispielsweise die in FIG 5 mit dem Bezugzeichen D dargestellte Form. In der Datenflankenermittlungseinrichtung DFI werden der ansteigenden und abfallenden Flanke des Datensignales D Datenflankenimpulse 1 zugeordnet. Diese Datenflankenimpulse I haben eine geringere Impulsbreite, als ein einzelnes Bit des Datensignales D. Nur während dieser Datenflankenimpulse I können sich die Kapazitäten C1...C11 der RC-Glieder aufladen. Diese Zeitabschnitte sind in FIG 5 durch das Bezugzeichen a und die dazugehörenden Teilbereiche der Taktsignale T1 bis T11 gekennzeichnet.

Die Funktionsweise der in FIG 4 dargestellten Schaltungsanordnung ergibt sich derart, daß während der auftretenden Datenflankenimpulse I die Enhancement-MOS-FET R1 bis R11 leitend geschaltet werden, so daß an jedem Kondensator C1 bis C11 die über die Datenflankenimpulsbreite a gemittelte Eingangsspannung des RC-Gliedes ansteht. Diese Spannung geht jeweils auf den unteren Enhancement-MOS-FET N1 bis N11 An den mit Bezugszeichen P1 bis P11 gekennzeichneten Enhancement-MOS-FETs gelangt das an den Ausgangsklemmen A1 bis A11 auskoppelbare Signal des Ringoszillators RO. Je positiver nun der Kondensator C1 bis C11 eines RC-Gliedes aufgeladen ist, desto mehr wird die zugehörige Ausgangsklemme A1 bis A11 des Ringoszillators RO auf die Ausgangsklemme XY und damit auf den Taktausgang wirksam. Es lädt sich dasjenige RC-Glied am meisten auf, dessen Eingang während der Dauer der Datenflankenimpulse 1 durchwegs positiv ist. Das aus den Enhancement-MOS-FET P1 bis P11 und N1 bis Nil gebildete NOR-Gatter, dessen Ausgangsklemme die Klemme XY ist, mittelt die von den RC-Gliedern bewerteten Taktsignale T1 bis T11 des Ringoszillators RO. Dadurch wird das arithmetische Mittel der auftretenden Phasenabweichungen der einzelnen Taktsignale T1 bis T11 zu den Datenflankenimpulsen 1 bestimmt und daraus ein Taktsignal T als regenerierter Datentakt gebildet. Es ist jedoch zu berücksichtigen, daß die Digitalisierstufe DIS das Taktsignal um eine Phasenverschiebung PV verzögert.

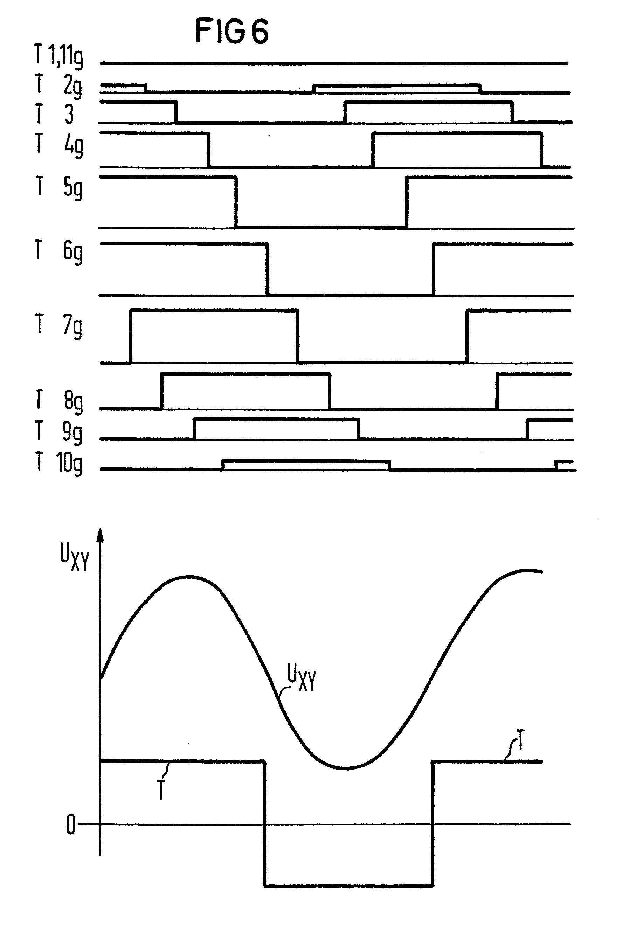

Diese Funktionsweise wird anhand der FIG 6 noch eingehender erläutert. In FIG 6 sind die gewichteten Taktsignale T1g...T11 g ausschnittsweise dargestellt. Die Gewichtung ergibt sich nach Maßgabe der während der Datenflankenimpulse I auftretenden positiven Impulsanteile der an den Ausgangsklemmen A1 bis A11 erscheinenden Taktsignale T1 bis T11. Die Summation dieser gewichteten Taktsignale T1g bis T11g an der Klemme XY ergibt ein Ausgangssignal $U_{XY}$, wie es in FIG 6 unten zu sehen ist. Wird dieses Signal $U_{XY}$ kapazitiv ausgekoppelt und digitalisiert, wie dies im Zusammenhang mit FIG 4 und der dort dargestellten Kapazität C sowie der Digitalisierstufe DIS der Fall ist, so steht an der Ausgangsklemme DA1 der Schaltungsanordnung das als regeneriertes Datentaktsignal gebildete Datentaktsignal T an. Es ist deutlich zu erkennen, daß dieses Taktsignal T phasengleich zum Taktsignal T6 bzw. zum gewichten Taktsignal T6g ist.

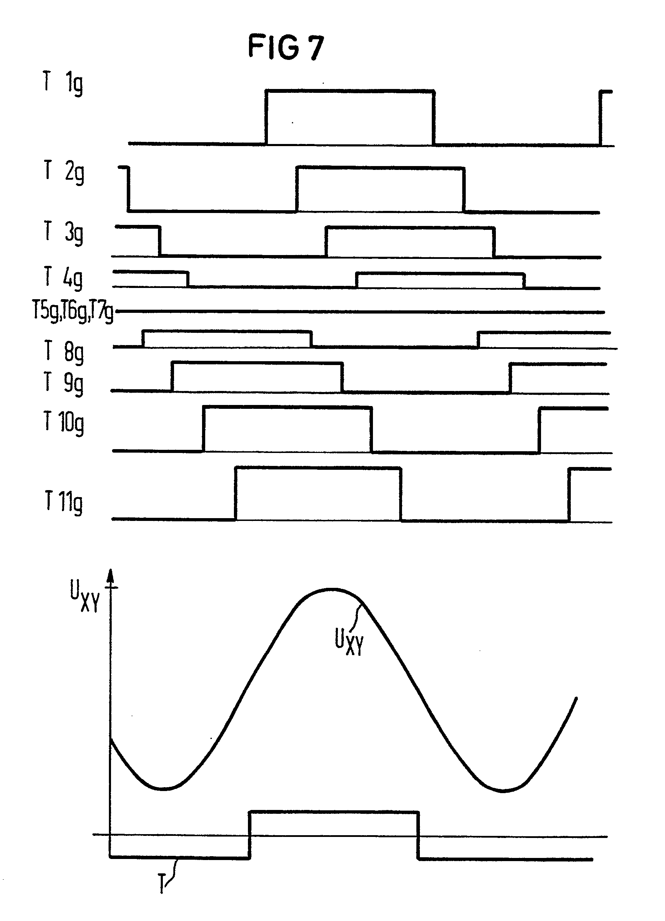

In FIG 5 ist ein zweites Beispiel für ein Datensignal D1 und dem dazugehörigen Datenflankenimpuls I1 gezeigt. Die ansteigende Flanke des Datenflankenimpulses mit der Breite b liegt zwischen der ansteigenden Flanke des ersten Taktsignales T1 und zweiten Taktsignales T2. Die arithmetische Mittelung sämtlicher Phasenabweichungen der Taktsignale T1 bis T11 zur ansteigenden Flanke des Datenflankenimpulses I1 und dem daraus ermittelbaren Taktsignal ist im Zusammenhang mit FIG 7 noch graphisch erläutert. Die gewichteten Taktsignale T1g bis T11g sind wieder ausschnittsweise dargestellt. Die Summation der Taktsignale an der Klemme XY ergibt das sinusförmige Signal $U_{XY}$, das bereits die korrekte Phase aufweist. Nach Beseitigung des Gleichanteils und anschließender Digitalisierung erscheint an der Ausgangsklemme DA1 der Schaltungsanordnung das als regenerierter Datentakt geltende Taktsignal T. Die endgültige Phase des Taktsignals T zu den NRZ-Daten hängt ab von der Breite des Datenflankenimpulses I bzw. I1 in FIG 5 und von der Signalverzögerung der Digitalisierstufe DIS in FIG 4. Der Einfachheit halber ist in FIG 6 und 7 die Signalverzögerung der Digitalisierstufe DIS unendlich klein angenommen. Im Idealfall decken sich dann zeitlich die ansteigende Flanke des Ausgangstaktes T mit den Flanken des Datensignals D, so daß eine bewertende fallende Flanke des Ausgangstaktes T stets zwischen zwei möglichen Flanken des Datensignals D liegt.

Es ist hier anzumerken, daß die Dimensionierung der RC-Glieder so sein soll, daß mehrere Datenflanken notwendig sind, um eine Kapazität auf die endgültige Spannung aufzuladen. Es muß jedoch auch so dimensioniert sein, daß mehrere Eingänge des NOR-Gat ters durchgesteuert sein müssen um dessen Ausgang auf Low-Potential zu ziehen. Die RC-Zeitkonstante der RC-Glieder ist jedoch auch so zu dimensionieren, daß die Schaltungsanordnung nach einem Datensignal mit dem Takteinlauf 0101... rechtzeitig einschwingen kann.

Bei einem gestörten, z. B. verrauschten Datensignal, sorgt die Trägheit der RC-Glieder dafür, daß ein korrektes Taktsignal ableitbar ist. Die Frequenzregelung des Ringoszillators RO wird von der in FIG 4 dargestellten Schaltungsanordnung nicht beeinflußt. Stimmt die Frequenz $f_A$ des Ringoszillators RO nicht genau mit der Datenübertragungsfrequenz $f_D$ überein, so läuft die Phase ständig durch, d. h. die Bewertung der Abgriffe an den Ausgangsklemmen A1 bis A11 verschiebt sich langsam, womit ein korrektes Datentaktsignal beibehalten wird.

In den vorausgegangenen Beispielen wurde das erfindungsgemäße Verfahren anhand einer Schaltungsanordnung erläutert, mit deren Hilfe das arithmetische Mittel der auftretenden Phasenabweichungen der verschiedenen Taktsignale zu den Datenflankenimpulsen bestimmt und daraus ein Taktsignal als regenerierter Datentakt abgeleitet wird. Das erfindungsgemäße Verfahren ist jedoch auch in einfacher Weise derart auszuführen, daß dasjenige Taktsignal aus der Vielzahl von zueinander phasenverschobener Taktsignale ausgewählt wird, das die geringste Phasenabweichung zu den Datenflankenimpulsen aufweist, wobei Signallaufzeiten in der Schaltungsanordnung zu berücksichtigen sind.

Wie im Blockschaltbild von FIG 8 dargestellt, ist es in einfacher Weise möglich, mittels eines Phasenvergleichers PV und eines Phasendetektors PDT die Differenz der Phasenabweichungen der Datenflankenimpulse zu den einzelnen Datensignalen, die am Ausgang des spannungsgesteuerten Oszillators VCO anstehen, zu ermitteln. Wird dasjenige Taktsignal mit der geringsten Phasenabweichung ausgewählt, so kann taktrichtig das Datensignal ausgewertet werden. Die Phasenabweichung ist natürlich umso geringer, je mehr Stufen beispielsweise der Ringoszillator aufweist.

Die konkrete Ausgestaltung eines solchen Phasendetektors und Phasenvergleichers liegt im durchschnittlichen Können des Fachmanns. Auf eine detaillierte Darstellung wird deshalb in diesem Zusammenhang verzichtet.

## Ansprüche

1. Verfahren jur Datentaktregenerierung für Datensignale (D) mit einer bekannten Datentaktfrequenz ($f_D$) unter Verwendung von aus den Datensignalen (D) gewonnenen Datenflankenimpulsen (I),
**dadurch gekennzeichnet**
daß aus einer Vielzahl von zueinander phasenverschobener Taktsignale (T1...T11) mit mindestens annähernd der bekannten Datentaktfrequenz ($f_D$) ein Taktsignal (T) als regenerierter Datentakt gebildet wird, das eine geringste Phasenabweichung zu den Datenflankenimpulsen (I) aufweist.

2. Verfahren nach Anspruch 1,
**dadurch gekennzeichnet**
daß das Taktsignal (T) durch das arithmetische Mittel der auftretenden Phasenabweichungen zwischen den Datenflankenimpulsen (I) und aller Taktsignale (T1...T11) bestimmt wird.

3. Verfahren nach Anspruch 1,
**dadurch gekennzeichnet**
daß das Taktsignal (T) als regenerierter Datentakt aus allen Taktsignalen (T1...T11) ausgewählt wird, das die geringste Phasenabweichung zu den Datenflankenimpulsen (I) aufweist.

4. Verfahren nach einem der Ansprüche 1 bis 3,
**dadurch gekennzeichnet**
daß die Taktsignale (T1...T11) äquidistante Phasenverschiebungen (PV) aufweisen.

5. Verfahren nach einem der Ansprüche 1 bis 4,
**dadurch gekennzeichnet**
daß bei auftretenden Phasenschwankungen der Datenflankenimpulse (I) das als regenerierter Datentakt gebildete Taktsignal (T) durch erneutes Ermitteln der geringsten Phasenabweichung nachgeführt wird.

6. Verfahren nach einem der Ansprüche 1 bis 5,
**dadurch gekennzeichnet**
daß die Datenflankenimpulse (I) eine geringere Impulsbreite (a, b) aufweisen als ein einzelnes Bit (Bit) des Datensignals (D).

7. Schaltungsanordnung nach einem der Ansprüche 1 bis 6,
**gekennzeichnet,**
durch mindestens
- eine Oszillatoreinrichtung (VCO) zum Erzeugen einer Vielzahl von zueinander phasenverschobener und jeweils mindestens annähernd die Datentaktfrequenz ($f_D$) aufweisender Taktsignale (T1...T11), die an Ausgangsklemmen (A1...A11) der Oszillatorschaltung (VCO) anlegbar sind,
- eine Datentaktermittlungseinrichtung (DEE) mit einer ersten Eingangsklemme (EK1) für das Datensignal (D), einer mit der ersten Eingangsklemme (EK1) verbundenen Datenflankenimpulseinrichtung (DFI) und weiteren mit den Ausgangsklemmen (A1...A11) der Oszillatoreinrichtung (VCO) verbundenen Eingangsklemmen (E1...E11) sowie einer Datentaktausgangsklemme (DA1), an die in Abhängigkeit von der Phasenabweichung zwischen den Datenflankenimpulsen (I) der Datensignale (D) und der an den weiteren Eingangsklemmen (E1...E11) anlegbaren Taktsignale (T1...T11) ein Taktsignal (T) als regeneriertes Datentaktsignal abgreifbar ist.

8. Schaltungsanordnung nach Anspruch 7,
**gekennzeichnet,**
durch eine spannungsgesteuerte Oszillatorschaltung (VCO), bestehend aus einem Ringoszillator (RO) mit einer ungeraden Anzahl von hintereinandergeschalteten und jeweils zwischen Versorgungsspannungsklemmen ($U_{DD}$, $U_{SS}$) liegender Inverterstufen (1...11) mit Lasttransistoren (L1...L11), wobei die Ausgangsklemme (A11) der letzten Inverterstufe (11) mit der Eingangsklemme (e1) der ersten Inverterstufe (1) verbunden ist, jeder Steueranschluß (G1.. .G11) der Lasttransistoren (L1...L11) mit einer die Oszillatorfrequenz ($f_D$) bestimmenden Steuergröße (RSX) verbindbar und an jeder Ausgangsklemme (A1...A11) einer Inverterstufe (1...11) ein Taktsignal (T1...T11) abgreifbar ist.

9. Schaltungsanordnung nach Anspruch 8,
**dadurch gekennzeichnet,**
daß den Ausgangsklemmen (A1...A11) der Inverterstufen (1...11) des Ringoszillators (RO) jeweils eine Auskoppelstufe (AS1...AS11) vorgeschaltet ist.

10. Schaltungsanordnung nach Anspruch 8 oder 9,
**dadurch gekennzeichnet,**
daß der Ringoszillator (RO) mindestens 11 Inverterstufen aufweist.

11. Schaltungsanordnung nach einem der Ansprüche 7 bis 10,
**dadurch gekennzeichnet,**
daß die Datenflankenimpulseinrichtung (DFI) nach Art einer EXOR-Einrichtung aufgebaut ist, an deren zweiter Eingangsklemme (EX2) das unverzögerte Datensignal (D) und an deren erster Eingangsklemme (EX1) ein dazu verzögertes Datensignal (vD) anlegbar ist, und an deren Ausgangsklemme (AX1) die Datenflankenimpulse (I) abgreifbar sind.

12. Schaltungsanordnung nach einem der Ansprüche 7 bis 11,
**dadurch gekennzeichnet,**
daß die weiteren Eingangsklemmen (E1...E11) der Datentaktermittlungseinrichtung (DEE) einerseits jeweils mit den Eingangsklemmen (ER1...ER11) von schaltbaren RC-Gliedern (RC1...RC11) und andererseits mit Eingangsklemmen (EN1...EN11) eines NOR-Gatters verbunden sind, deren weitere Eingangsklemmen (EN12...EN22) mit Ausgangsklemmen (AR1...AR11) der schaltbaren RC-Glieder (RC1...RC11) verbunden sind, und die schaltbaren RC-Glieder (RC1...RC11) in Abhängigkeit der Datenflankenimpulse (I) steuerbar sind und die Datentaktausgangsklemme (DA1) über eine Digitalisierstufe (DIS) mit einer Ausgangsklemme (XY) des NOR-Gatters verbunden ist.

13. Schaltungsanordnung nach einem der Ansprüche 7 bis 12,
**gekennzeichnet,**
durch die Integretation auf einem Halbleiterträgerkörper.

14. Schaltungsanordnung nach einem der Ansprüche 7 bis 13,
**gekennzeichnet,**
durch die Realisierung in MOS-Technologie.

FIG 1

FIG 2

FIG 3

FIG 8

FIG 4

FIG 5

# FIG 6

T 1,11g

T 2g

T 3

T 4g

T 5g

T 6g

T 7g

T 8g

T 9g

T 10g

$U_{XY}$

$U_{XY}$

T

T

0

# FIG 7

T 1g

T 2g

T 3g

T 4g

T5g,T6g,T7g

T 8g

T 9g

T 10g

T 11g

$U_{XY}$

$U_{XY}$

T

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 165 498 (K.K. TOSHIBA) * Seite 5, Zeile 8 - Seite 6, Zeile 35 * | 1-5 | H 04 L 7/033 H 04 N 7/00 |
| A | --- | 7 | |
| X | US-A-4 189 622 (FOSHEE) * Spalte 3, Zeilen 3-48; Spalte 7, Zeilen 22-31 * | 1-6 | |
| A | --- | 7 | |
| X | FR-A-2 283 592 (THOMSON-CSF) * Seite 3, Zeile 1 - Seite 4, Zeile 11 * | 1-5 | |
| A | --- | 7,8 | |
| X | EP-A-0 023 852 (THOMSON-CSF) * Seite 8, Zeile 25 - Seite 9, Zeile 5; Seite 14, Zeile 27 - Seite 16, Zeile 35 * | 1-5 | |
| A | EP-A-0 274 606 (SIEMENS) * Zusammenfassung * --- | 1-14 | RECHERCHIERTE SACHGEBIETE (Int. Cl.5) |
| A | EP-A-0 237 408 (ETAT FRANCAIS) * Seite 5, Zeilen 4-11 * --- | 6,11 | H 04 L H 04 N |
| A | IEEE JOURNAL OF SOLID-STATE CIRCUITS, Band SC-22, Nr. 2, April 1987, Seiten 255-261, IEEE, New York, US; D.-K. JEONG et al.: "Design of PLL-based clock generation circuits" * Seite 256, linke Spalte, Zeile 37 - Seite 257, rechte Spalte, Zeile 2 * ------ | 8-10,13,14 | |

Der vorliegende Recherchenbericht wurde für alle Patentansprüche erstellt

| Recherchenort | Abschlußdatum der Recherche | Prüfer |
|---|---|---|
| DEN HAAG | 23-11-1989 | VERSLYPE J.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)